# FASCICULE DE BREVET EUROPEEN

(11) **EP 0 489 658 B1**
(45) Date de publication et mention de la délivrance du brevet: **28.09.1994**
(21) Numéro de dépôt: 91403285.9
(22) Date de dépôt: 05.12.1991
(51) Int. Cl.: B65D 85/48, B65G 49/06

(54) **Procédé de séparation de vitrages**
Verfahren zum Trennen von Glasscheiben
Method for separating glass sheets

(30) Priorité: 06.12.1990 FR 9015278
(43) Date de publication de la demande: 10.06.1992
(73) Titulaire: SAINT-GOBAIN VITRAGE INTERNATIONAL, 92400 Courbevoie (FR)
(72) Inventeur: Bocelli, Aureliano, I-Livorno (IT); Natali, Marco, I-Lido Di Camaiore (IT)
(74) Mandataire: Menes, Catherine

(56) Documents cités:
- FR-A- 1 408 939
- FR-A- 2 221 003
- FR-A- 2 343 707

## Description

La présente invention a trait aux techniques d'emballage des vitrages, notamment de ceux destinés aux véhicules automobiles, en vue de leur stockage ou transport par lots. Plus précisément l'invention a pour objet un procédé de séparation de vitrages notamment en vue de la réalisation d'une pile de vitrages.

Pour des volumes de dimensions relativement petites, tels ceux rencontrés pour les vitres latérales des véhicules automobiles, généralement faiblement bombés et encore selon des formes presque exclusivement cylindriques, la technique d'emballage la plus avantageuse consiste tout simplement dans la superposition à plat des feuilles en intercalant des éléments de séparation, en général du papier, qui évitent que les feuilles de verre soient dégradées par frottements mutuels. On peut ainsi constituer des charges de par exemple trois à quatre cents vitrages.

Mais les développements récents de l'industrie automobile, liés notamment à l'emploi de robots, conduisent cette industrie à demander des produits verriers de plus en plus sophistiqués, prêts à l'emploi, c'est-à-dire pouvant être montés directement sur la ligne de production des véhicules automobiles. Pour les latéraux automobiles, cette tendance se traduit par exemple par la fourniture directe par le verrier, d'un vitrage muni d'un patin portant une rainure servant de glissière pour le dispositif de montée-baisse de la vitre.

Ces patins forment des saillies qui déséquilibrent rapidement la pile quand les vitrages sont superposés, la charge devenant instable à partir d'une trentaine de vitrages. Les contraintes de l'automatisation excluent pratiquement une alternance de la position des patins visant à compenser les différences d'épaisseurs entre le bord du vitrage muni du patin et les bords opposés ; de toute façon, nombre de vitrages sont trapezoïdaux ou de toute autre forme non symétrique interdisant une superposition alternée.

D'autre part, les formes de vitrages aujourd'hui élaborées sont souvent très complexes, engendrant une difficulté supplémentaire pour l'élaboration des piles, difficulté due à ce que la superposition de deux vitrages n'est plus possible que si leur positionnement relatif est parfaitement exact, alors que les formes traditionnelles par exemple du type secteur de cylindres de révolution tolèrent des écarts de positionnement bien plus grands.

On connaît l'usage de cavaliers intercalaires montés et otés manuellement ou de façon automatique qui viennent compenser la hauteur du patin. Toutefois, ces cavaliers intercalaires faits en matière plastique rigide ont un coût élevé en comparaison par exemple de celui des feuilles de papier, d'autant que la mise en place d'un système de recyclage des ces cavaliers avec par exemple une consigne est malcommode compte tenu de la multiplicité des sources d'approvisionnement des fabricants automobiles. Enfin, et il ne s'agit pas là du moindre des inconvénients, la pose des cavaliers se prête mal à une automatisation complète de la ligne de conditionnement des vitrages.

Du brevet français 2 343 707, il est aussi connu d'utiliser comme moyen de marquage et de séparation de feuilles de verre, des parcelles de cire ou de paraffine qui viennent en saillie, au-dessus de la surface des feuilles. Ce moyen de marquage est destiné plus particulièrement à des vitrages pour le bâtiment dont il est de règle de les rendre visibles tant que le bâtiment n'est pas entièrement achevé. La cire, appliquée à raison de 4 à 100 spots au mètre carré remplace l'intercalaire papier et est éliminée par lavage à l'eau chaude du vitrage. L'avantage de cette technique est qu'elle peut être automatisée beaucoup plus simplement que la pose de cavaliers intercalaires, mais ceci dans la mesure où elle a été développée pour des vitrages plans. D'autre part, le marquage qui est voulu dans le cas du brevet français précité est normalement considéré comme un défaut car il entraîne une étape supplémentaire de nettoyage après la pose.

Les auteurs de la présente invention se sont donnés pour but un nouveau procédé de séparation de vitrages en vue par exemple de la réalisation de piles, propre notamment à résoudre le problème particulier de l'empilage des vitrages automobiles du type vitres latérales, munis d'un ou plusieurs patins disposés le long d'un même bord ou plus généralement de l'empilage de tous les vitrages présentant en certains points de leurs surfaces des excroissances créant des surfaces d'appui disymétriques.

Selon l'invention, il est proposé de procéder à la séparation de vitrages empilés à plat les uns au-dessus des autres, deux vitrages successifs étant séparés par un intercalaire papier sur lequel est collée au moins une entretoise. Dans l'application type de ce procédé à la réalisation d'une pile de vitrages épaisseur et disposition de l'entretoise sont choisies telles que les deux vitrages soient maintenus équidistants.

Comme il ressort à l'évidence de la définition de l'invention faite ci-dessus, le ou les entretoises qui équilibrent la pile de vitrages sont associées non aux feuilles de verre mais à l'intercalaire papier et sont éliminées avec celui-ci. Par élimination, on veut dire qu'il ne reste plus aucune trace des entretoises sur le vitrage de dessus dont la face inférieure n'est pas protégée par l'intercalaire papier, et notamment pas de formation d'un halo qui obligerait à un nettoyage du vitrage.

Pour garantir la stabilité de charges comportant par exemple plus de 300 vitrages superposés, il doit être choisi comme matériau de fabrication des entretoises un matériau ayant une résistance à la compression relativement élevée, par exemple telle que la déformation mesurée soit inférieure à 10 % pour une charge de 50 kg/cm². Mais bien sûr cette dureté du matériau ne doit pas pouvoir engendrer le moindre marquage, même en cas de frottements du verre ou des parties revêtues de bandes émaillées décoratives ou fonctionnelles.

Ces entretoises sont de préférence formées in-situ par extrusion par exemple au moyen de machines standards, d'une matière thermoplastique et thermocollante. Cette extrusion est effectuée directement au-dessus de l'intercalaire papier, méthode qui présente le double avantage de la simplicité de réalisation et d'une auto-adaptation à la forme réelle des vitrages.

Pour minimiser le collage sur la feuille de verre suivante, il est avantageux d'utiliser une matière plastique solidifiant très rapidement, par exemple telle qu'une goutte de 0,25 cm³ déposée à l'état fondu sur une plaque de verre à 30°C soit entière solidifiée après au plus 20 secondes. Dans ce même but, il est tout particulièrement préféré des entretoises déposées sous forme de bandes dont le rapport longueur sur largeur est par exemple supérieur à 10, les segments les plus longs pouvant avoir une longueur voisine de celle d'un bord parallèle du vitrage. De telles entretoises en bande se décollent beaucoup plus facilement du verre que des spots correspondant à des dépôts par gouttes. Enfin, l'adhérence peut être également minimisée par une nébulisation d'eau sur la surface du vitrage, la pellicule d'eau déposée à l'interface réduisant les phénomènes d'adhérence sur le verre.

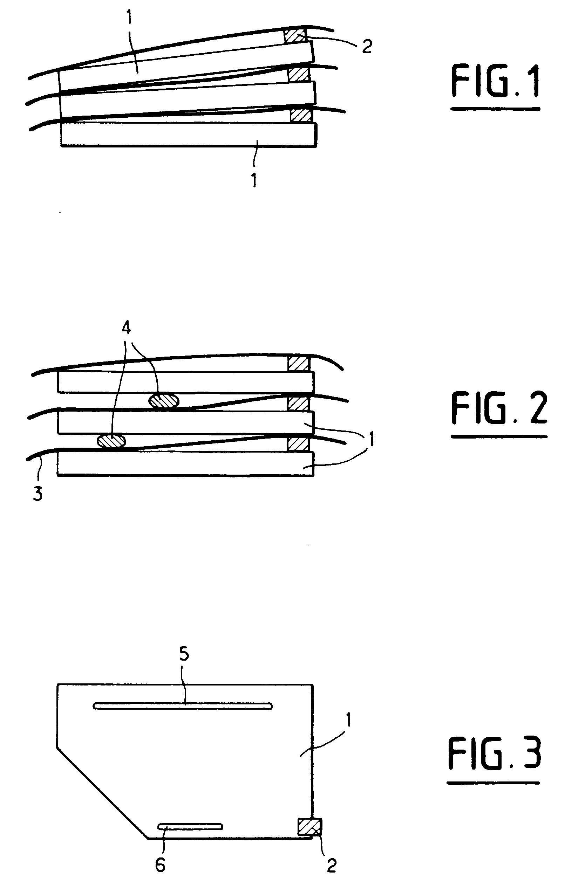

D'autres détails et caractéristiques avantageuses de l'invention ressortent de la description faite ci-après en référence aux dessins qui représentent :
. **figure** 1 : une pile de vitrages munis de patins déséquilibrant l'ensemble,
. **figure** 2 : une pile de vitrages conforme à l'invention,
. **figure** 3 : une vue de dessus d'un vitrage muni d'un patin, illustrant la position des entretoises.

La figure 1 illustre, de manière volontairement exagérée, le problème posé notamment par la présence de patins lorsque l'on cherche à réaliser l'emballage de vitrages par exemple du type vitrages automobiles. Chaque vitrage 1 est constitué par une feuille de verre, ici représentée plane, mais en réalité le plus souvent bombée, qui est munie sur un bord d'un patin 2 dont l'épaisseur est par exemple de l'ordre du millimètre ou plus. Il est connu d'utiliser des palettes de transport dans lesquelles les vitrages reposent sur leur tranche et sont séparés par des éléments intercalaires. Mais de telles palettes sont relativement onéreuses et de ce fait généralement réservées à des vitrages assez grands tels que des pare-brise ou lunettes arrières.

Pour les vitres latérales, ouvertures de portes, fixes avant ou arrière, custodes, l'emballage est généralement effectué de la manière la plus simple en empilant les feuilles de verre les unes au-dessus des autres et en les séparant par de simple intercalaires-papiers 3. Mais avec des vitrages portant des patins 2 on aboutit rapidement à un déséquilibre de la pile qui limite le nombre de vitrages disponibles par lot.

L'invention (figure 2) propose de remédier très simplement à ce problème en déposant sur l'intercalaire-papier 3 des entretoises 4 en matière plastique, collées à cet intercalaire-papier et qui partent avec celui-ci lors du déballage. Ces entretoises font ainsi office de cale et maintiennent les faces des feuilles de verre équidistantes.

Comme on peut le voir sur la figure 2, les entretoises 4 sont de préférence légèrement décalées les unes par rapport aux autres afin d'éviter que tout le poids de la charge ne repose sur le même axe. Avantageusement, les entretoises sont sous forme de bandes 5, 6 judicieusement disposées en fonction de la forme du vitrage, souvent trapézoïdale comme dessiné sur la figure 3 et de la position des patins. Généralement une ou deux bandes suffisent au bon équilibrage de la pile.

Pour la mise en place des entretoises, on peut utiliser tout type de machine d'extrusion, développée par exemple pour l'application des adhésifs en gel.

La matière plastique extrudée doit durcir dans un temps compatible avec les cadences d'emballage, la feuille de verre suivante ne pouvant être posée sur la pile qu'une fois l'entretoise suffisamment refroidie pour l'obtention d'une résistance mécanique suffisante et la disparition plus ou moins totale de son caractère collant sur le verre. Dans cette optique, il est plus particulièrement avantageux d'employer une matière plastique, par exemple du type polyester, dont le temps de durcissement est par exemple compris entre 10 et 20 secondes, c'est-à-dire suffisamment bref pour ne pas nécessiter de magasin de stockage intermédiaire et permettre ainsi un emballage directement en bout de ligne. A noter qu'une pulvérisation d'eau au moyen d'un nébulisateur, juste au niveau de la zone d'appui de l'entretoise sur le verre permet également de limiter cet effet de collage et va avantageusement limiter les phénomènes de glissement car alors le papier est maintenu en place et "colle" au vitrage mouille. D'autres agents que l'eau peuvent être utilisés dans le même but, mais celle-ci présente bien sûr l'avantage, outre son coût relativement modéré, de ne laisser aucune trace après évaporation.

En procédant selon l'invention, on peut constituer des piles de par exemple 300 vitrages sans le moindre risque de dégradation des volumes par frottement ou par déséquilibrage de la pile.

## Revendications

1. Procédé de séparation de vitrages déposés à plat les uns au-dessus des autres en disposant des intercalaires-papiers (3) entre deux vitrages successifs, **caractérisé en ce qu'**au moins une entretoise (4) est collée sur l'intercalaire-papier (3).

2. Procédé de séparation de vitrages selon la revendication 1, **caractérisé en ce que** ladite entretoise (4) est formée dans une matière plastique dont la déformation à 20°C est inférieure à 10 % sous une charge de 50 kg/cm².

3. Procédé de séparation de vitrages selon la revendication 1 ou 2, **caractérisé en ce que** la ou lesdites entretoises sont formées par extrusion in-situ d'une matière thermoplastique thermocollante.

4. Procédé de séparation de vitrages selon la revendication 3, **caractérisé en ce que** ladite extrusion est effectuée à une température comprise entre 150 et 230°C, pour une viscosité de la matière thermoplastique comprise entre 5000 et 20 000 mPas.

5. Procédé de séparation de vitrages selon la revendication 3 ou 4, **caractérisé en ce que** ladite matière thermoplastique présente un temps de solidification inférieur à 20 secondes, mesuré pour une goutte de matière de 0,25 cm³ qui est déposée à l'état fondu sur une plaque de verre à 30°C.

6. Procédé de séparation de vitrage selon l'une des revendications 3 à 5, **caractérisé en ce que** l'on opère une nébulisation d'eau sur la face du vitrage devant être mise en contact avec l'entretoise (4).

7. Procédé de séparation de vitrages selon l'une des revendications 3 à 6, **caractérisé en ce que** l'entretoise (4) est extrudée sous forme de bande (5, 6) ayant un rapport longueur sur largeur au moins égal à 10.

8. Procédé de séparation de vitrages selon l'une des revendications 3 à 7, **caractérisé en ce que** l'entretoise (4) est extrudée sous forme de gouttes.

9. Procédé de séparation de vitrages selon l'une des revendications 3 à 7, **caractérisé en ce que** lesdites entretoises sont en polyester.

10. Application du procédé de séparation selon l'une des revendications précédentes à la réalisation de piles de vitrages, l'épaisseur de l'entretoise et sa disposition étant choisies telles que les deux vitrages ainsi séparés sont maintenus équidistants.

## Claims

1. Process for the separation of glazings deposited flat and in superimposed manner by placing paper interlayers (3) between two successive glazings, characterized in that at least one spacer (4) is bonded to the paper interlayer (3).

2. Process for the separation of glazings according to claim 1, characterized in that said spacer (4) is made from a plastics material, whose deformation at 20°C is less than 10% under a load of 50 kg/cm².

3. Process for the separation of glazings according to claim 1 or 2, characterized in that the spacer or spacers are formed by the in situ extrusion of a thermally adhesive, thermoplastic material.

4. Process for the separation of glazings according to claim 3, characterized in that said extrusion is performed at a temperature between 150 and 230°C for a viscosity of the thermoplastic material between 5,000 and 20,000 mPas.

5. Process for the separation of glazings according to claim 3 or 4, characterized in that said thermoplastic material has a setting time below 20 seconds, measured for a 0.25 cm³ drop of material, which is deposited in the molten state on a glass plate at 30°C.

6. Process for the separation of glazings according to any one of the claims 3 to 5, characterized in that water is sprayed on to the face of the glazing to be brought into contact with the spacer (4).

7. Process for the separation of glazings according to any one of the claims 3 to 6, characterized in that the spacer (4) is extruded in the form of a strip (5, 6) having a length to width ratio of at least 10.

8. Process for the separation of glazings according to any one of the claims 3 to 7, characterized in that the spacer (4) is extruded in drop form.

9. Process for the separation of glazings according to any one of the claims 3 to 7, characterized in that said spacers are made from polyester.

10. Application of the separation process according to any one of the preceding claims to the production of stacks of glazings, the thickness of the spacer and its arrangement being chosen in such a way that two glazings separated in this way are kept equidistant.

## Patentansprüche

1. Verfahren zum Trennen von flach übereinandergelegten Glasscheiben, indem zwischen zwei aufeinanderfolgende Glasscheiben eine Papierzwischenschicht (3) eingelegt wird, **dadurch gekennzeichnet, daß** auf die Papierzwischenschicht (3) wenigstens ein Abstandshalter (4) geklebt ist.

2. Verfahren zum Trennen von Glasscheiben nach Anspruch 1, **dadurch gekennzeichnet, daß** der Abstandshalter (4) aus einem Kunststoff gebildet ist, dessen Verformung bei 20 °C unter einer Last von 50 kg/cm² weniger als 10 % beträgt.

3. Verfahren zum Trennen von Glasscheiben nach Anspruch 1 oder 2, **dadurch gekennzeichnet, daß** der oder die Abstandshalter durch Insitu-Extrudieren eines heißklebenden thermoplastischen Kunststoffs gebildet ist/sind.

4. Verfahren zum Trennen von Glasscheiben nach Anspruch 3, **dadurch gekennzeichnet, daß** das Extrudieren bei einer Temperatur von 150 bis 230 °C durchgeführt wird, damit der thermoplastische Kunststoff eine Viskosität von 5000 bis 20000 mPa·s aufweist.

5. Verfahren zum Trennen von Glasscheiben nach Anspruch 3 oder 4, **dadurch gekennzeichnet, daß** die Verfestigungszeit dieses thermoplastischen Kunststoffs weniger als 20 Sekunden beträgt, gemessen an einem Kunststofftropfen von 0,25 cm³, der im geschmolzenen Zustand auf eine 30 °C warme Glasplatte aufgebracht wird.

6. Verfahren zum Trennen von Glasscheiben nach einem der Ansprüche 3 bis 5, **dadurch gekennzeichnet, daß** auf der Glasscheibenoberfläche Wasser versprüht wird, bevor sie mit dem Abstandshalter (4) in Berührung gebracht wird.

7. Verfahren zum Trennen von Glasscheiben nach einem der Ansprüche 3 bis 6, **dadurch gekennzeichnet, daß** der Abstandshalter (4) in Form von Streifen (5, 6) extrudiert ist, deren Verhältnis von Länge zu Breite wenigstens 10 beträgt.

8. Verfahren zum Trennen von Glasscheiben nach einem der Ansprüche 3 bis 7, **dadurch gekennzeichnet, daß** der Abstandshalter (4) in Tropfenform extrudiert ist.

9. Verfahren zum Trennen von Glasscheiben nach einem der Ansprüche 3 bis 7, **dadurch gekennzeichnet, daß** die Abstandshalter aus Polyester bestehen.

10. Anwendung des Trennverfahrens nach einem der vorhergehenden Ansprüche zur Herstellung von Glasscheibenstapeln, wobei Dicke und Anordnung des Abstandshalters so gewählt werden, daß der Abstand der derart getrennten beiden Glasscheiben gleich bleibt.
